# EUROPÄISCHE PATENTSCHRIFT

(11) **EP 2 042 828 B1**
(45) Veröffentlichungstag und Bekanntmachung des Hinweises auf die Patenterteilung: **29.12.2010**
(21) Anmeldenummer: 08014744.0
(22) Anmeldetag: 20.08.2008
(51) Int. Cl.: G01B 11/06, G01B 17/02, B65C 9/42

(54) **Sensoranordnung zur Erfassung von Objekten**
Sensor for detection of objects
Capteur pour la détection des objets

(30) Priorität: 29.09.2007 DE 102007046769
(43) Veröffentlichungstag der Anmeldung: 01.04.2009
(73) Patentinhaber: Leuze electronic GmbH + Co. KG, 73277 Owen/Teck (DE)
(72) Erfinder: Patz, Jürgen, 72660 Beuren (DE); Merk, Thomas, 73240 Wendlingen (DE)
(74) Vertreter: Ruckh, Rainer Gerhard

(56) Entgegenhaltungen:
- DE-U1-202005 020 654
- JP-A- 61 193 005
- JP-A- 61 225 611

## Beschreibung

Die Erfindung betrifft eine Sensoranordnung gemäß dem Oberbegriff des Anspruchs 1.

Eine derartige Sensoranordnung ist aus der DE 20 2005 020 654 U1 bekannt. Die dort beschriebene Sensoranordnung dient zur Detektion von Etiketten auf einem Trägermaterial und umfasst einen optischen Sensor sowie einen Ultraschallsensor, welche über Schaltmittel wahlweise zur Detektion der Etiketten aktivierbar sind.

Sowohl der optische Sensor als auch der Ultraschallsensor arbeiten nach einer Transmissionsmessung, das heißt der Sender und der Empfänger des optischen Sensors einerseits sowie der Ultraschallsender und der Ultraschallempfänger des Ultraschallsensors andererseits sind jeweils beidseits einer Nachweisebene, in welcher das Trägermaterial mit den Etiketten relativ zur Vorrichtung geführt wird, angeordnet. Dabei ist die Sensoranordnung in einem gabelförmigen Gehäuse mit zwei Gabelarmen, zwischen welchen die Nachweisebene verläuft, angeordnet. Die Komponenten des optischen Sensors und des Ultraschallsensors sind so in diesem Gehäuse angeordnet, dass sich die Strahlachse der Ultraschallwellen, die vom Ultraschallsender emittiert werden, und die optische Achse der Sendelichtstrahlen, die vom Sender emittiert werden, in der Nachweisebene schneiden. Damit ist der aktuelle Messort und Messzeitpunkt zur Etikettendetektion unabhängig davon, ob der Ultraschallsensor oder optische Sensor hierfür eingesetzt wird.

Da bei dieser Sensoranordnung wahlweise ein Ultraschallsensor oder ein optischer Sensor zur Etikettendetektion eingesetzt werden kann, wird mit dieser eine sichere Etikettendetektion für ein breites Materialspektrum von Etiketten- und Trägermaterialien erreicht.

Um zu erreichen, dass sich die Ultraschallwellen und Sendelichtstrahlen in einer Nachweisebene schneiden, müssen der Ultraschallsender und Ultraschallempfänger einerseits sowie die Komponenten des optischen Sensors andererseits räumlich versetzt zueinander so angeordnet sein, dass die Strahlachsen der Ultraschallwellen und der Sendelichtstrahlen in einem definierten Winkel geneigt zueinander verlaufen. Dies bedingt einerseits einen beträchtlichen konstruktiven Aufwand und hat zudem zur Folge, dass das Gehäuse, in welchem die Sensoranordnung integriert ist, relativ groß dimensioniert werden muss.

Aus der JP 612 25 611 A ist eine Kombination eines Ultraschallsensors und eines optischen Sensors derart bekannt, dass der Ultraschallsensor auf den Optikkopf des optischen Sensors aufgesetzt wird.

In der JP 611 93 005 A ist eine Fernsehkamera beschrieben, auf welche ein Ultraschall-Distanzsensor aufgesetzt wird.

Der Erfindung liegt die Aufgabe zugrunde, eine Sensoranordnung der eingangs genannten Art bereitzustellen, welche bei geringem konstruktivem Aufwand eine erhöhte Nachweissicherheit aufweist.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Die erfindungsgemäße Sensoranordnung gemäß Anspruch 1 dient zur Erfassung von Objekten.

Durch die Integration des optischen Sensors innerhalb des Ultraschallsensors wird eine besonders kompakte Sensoranordnung mit kleinem Bauvolumen erzielt. Erfindungsgemäß übernehmen durch die Integration des optischen Sensors im Ultraschallsensor Bauteile eine Doppelfunktion derart, dass sie gleichzeitig funktionsrelevante Komponenten des optischen Sensors und des Ultraschallsensors bilden. Dies führt zu einer beträchtlichen Reduzierung der Herstellkosten der Sensoranordnung.

Ein weiterer wesentlicher Vorteil der erfindungsgemäßen Sensoranordnung besteht darin, dass der Ultraschallsensor und der in diesem integrierte optische Sensor eine vorgefertigte Baueinheit bilden, die eine separate Montage von Ultraschallsensoren und optischen Sensoren sowie eine Ausrichtung von Ultraschallsensoren und optischen Sensoren zueinander überflüssig macht.

Der Ultraschallsensor der erfindungsgemäßen Sensoranordnung weist wenigstens einen Ultraschallwandler auf, welcher einen Ultraschallsender oder einen Ultraschallempfänger bildet. In diesem Ultraschallwandler ist ein optoelektronisches Element integriert, welches einen Sendelichtstrahlen emittierenden Sender oder einen Sendelichtstrahlen empfangenden Empfänger bildet. Prinzipiell kann das optoelektronische Element auch von einem kombinierten Sende- und Empfangselement gebildet sein.

Besonders vorteilhaft verlaufen dabei die Strahlachsen der Ultraschallwellen und der Sendelichtstrahlen koaxial zueinander. Damit werden bei einer Objektdetektion die Objekte von den Ultraschallwellen und den Sendelichtstrahlen am selben Nachweisort erfasst. Dies ist besonders dann vorteilhaft, wenn die Objekte an der Sensoranordnung vorbeibewegt werden, da dann Objektstrukturen wie Objektkanten mit dem optischen Sensor und dem Ultraschallsensor nahezu zeitgleich erfasst werden können. Durch diese gleichzeitige Objekterfassung entfallen Timing-Probleme bei der Auswertung der durch den optischen Sensor und den Ultraschallsensor generierten Signale, was zu einer erhöhten Messgenauigkeit bei der Objekterfassung führt.

Bei der erfindungsgemäßen Sensoranordnung können je nach Beschaffenheit der zu erfassenden Objekte der Ultraschallsensor oder der optische Sensor einzeln aktiviert sein. Insbesondere können der Ultraschallsensor und der optische Sensor auch alternierend aktiviert sein. Weiterhin können der Ultraschallsensor und der optische Sensor gemeinsam aktiviert sein. Durch diese objektabhängige Wahl der Aktivierung des optischen Sensors und des Ultraschallsensors kann die Nachweisgenauigkeit der Sensoranordnung weiter erhöht werden.

Der optische Sensor kann dabei generell als Sensor ausgebildet sein, der Sendelichtstrahlen im sichtbaren Wellenlängenbereich emittiert. Weiterhin kann der optische Sensor auch Sendelichtstrahlen im Infrarot- oder Ultraviolettbereich emittieren.

Sowohl der optische Sensor als auch der Ultraschallsensor der Sensoranordnung arbeiten bevorzugt nach dem Prinzip der Transmissionsmessung. Mit dieser Sensoranordnung können insbesondere Strukturen mehrschichtiger und/oder mehrlagiger Objekte erfasst werden. Insbesondere eignet sich die Sensoranordnung zur Erfassung von Etiketten, die auf einem Trägermaterial angeordnet sind.

Die Erfindung wird im Nachstehenden anhand der Zeichnungen erläutert. Es zeigen:
- Figur 1:: Ausführungsform der erfindungsgemäßen Sensoranordnung zur Detektion von Etiketten auf einem Trägermaterial.
- Figur 2:: Erstes Ausführungsbeispiel eines Ultraschallwandlers mit darin integriertem optoelektronischen Element für die Sensoranordnung gemäß Figur 1.
- Figur 3:: Draufsicht auf eine Keramik für den Ultraschallwandler gemäß Figur 2.
- Figur 4:: Zweites Ausführungsbeispiel eines Ultraschallwandlers mit darin integriertem optoelektronischen Element für die Sensoranordnung gemäß Figur 1.
- Figur 5:: Draufsicht auf die Keramik mit dort aufgebrachtem optoelektronischen Element für den Ultraschallwandler gemäß Figur 4.

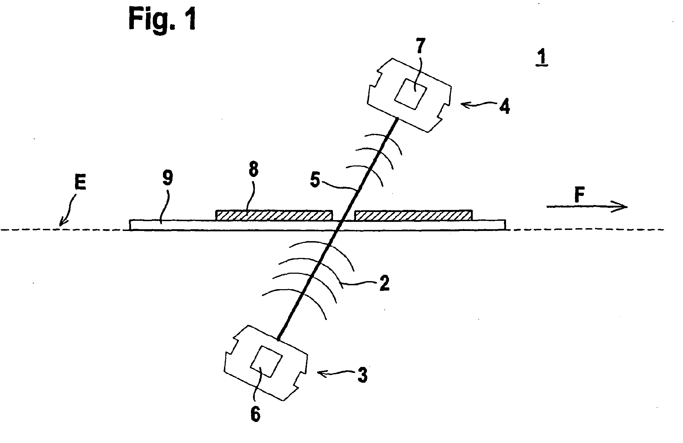

Figur 1 zeigt schematisch den Aufbau einer Sensoranordnung 1 zur Erfassung von Objekten in einem vorgegebenen Überwachungsbereich. Die Sensoranordnung 1 weist einen Ultraschallsensor auf. Dieser Ultraschallsensor weist einen ersten Ultraschallwandler auf, der einen Ultraschallwellen 2 emittierenden Ultraschallsender 3 bildet, sowie einen zweiten Ultraschallwandler, der einen Ultraschallwellen 2 empfangenden Ultraschallempfänger 4 bildet. Im Ultraschallsensor ist ein optischer Sensor integriert. Der optische Sensor weist als optoelektronisches Element einen Sendelichtstrahlen 5 emittierenden Sender 6 sowie einen Empfangslichtstrahlen empfangenden Empfänger 7 auf. Dabei ist in jedem Ultraschallwandler ein optoelektronisches Element integriert. Im vorliegenden Fall ist im Ultraschallsender 3 der Sender 6 integriert, im Ultraschallempfänger 4 ist der Empfänger 7 integriert. Wie aus Figur 1 ersichtlich, sind die optoelektronischen Elemente in den Ultraschallwandler so integriert, dass die Strahlachsen der vom Ultraschallsender 3 gerichtet emittierten Ultraschallwellen 2 und die vom Sender 6 emittierten Sendelichtstrahlen 5 koaxial verlaufen.

Die zu detektierenden Objekte sind von Etiketten 8 gebildet, die auf einem Trägermaterial 9 integriert sind. Das Trägermaterial 9 liegt in einer Nachweisebene E und wird in einer Förderrichtung F gefördert. Die Etiketten 8 liegen in Förderrichtung F in Abstand hintereinander auf dem Trägermaterial 9.

Die Strahlachse der Ultraschallwellen 2 verläuft geneigt zur Nachweisebene, um Rückreflexionen der vom Ultraschallsensor emittierten Ultraschallwellen 2 zu verhindern. Zur Gewährleistung der in Figur 1 gezeigten Positionen der Ultraschallwandler können diese in einem nicht dargestellten gabelförmigen Sensorgehäuse integriert sein.

Die Objektdetektion mittels des optischen Sensors und des Ultraschallsensors erfolgt jeweils nach dem Transmissionsprinzip. Hierzu sind der Ultraschallsender 3 und der Ultraschallempfänger 4 und damit auch der Sender 6 und der Empfänger 7 auf verschiedenen Seiten der zu detektierenden Objekte angeordnet. Je nachdem, ob die Ultraschallwellen 2 oder die Sendelichtstrahlen 5 nur auf das Trägermaterial 9 oder auf eine Etikette 8 mit dem darunter liegenden Trägermaterial 9 treffen, werden diese bei Durchgang durch die Objektstruktur unterschiedlich geschwächt. Zur Etikettendetektion werden die Ausgangssignale des Ultraschallempfängers 4 und des Empfängers 7 in einer nicht dargestellten Auswerteeinheit ausgewertet. Vorzugsweise werden die Ausgangssignale der Ultraschallempfänger 4 und des Empfängers 7 jeweils mit einem Schwellwert zur Generierung eines binären Objektfeststellungssignals verknüpft, wobei die Schaltzustände jedes Objektfeststellungssignals angeben, ob eine Etikette 8 vorliegt oder nicht. Über eine ebenfalls nicht dargestellte Steuereinheit können der optische Sensor und der Ultraschallsensor einzeln oder gemeinsam aktiviert sein. Ist nur der optische Sensor oder der Ultraschallsensor aktiviert, so bildet dessen Objektfeststellungssignal das binäre Schaltsignal, das als Sensorausgangssignal der Sensoranordnung 1 ausgegeben wird. Sind der optische Sensor und der Ultraschallsensor gemeinsam aktiviert, werden die Ausgangssignale beider Sensoren zur Generierung des binären Schaltsignals herangezogen. Im einfachsten Fall werden die Objektfeststellungssignale des Ultraschallsensors mit dem Objektfeststellungssignal des optischen Sensors zur Bildung des binären Schaltsignals logisch verknüpft.

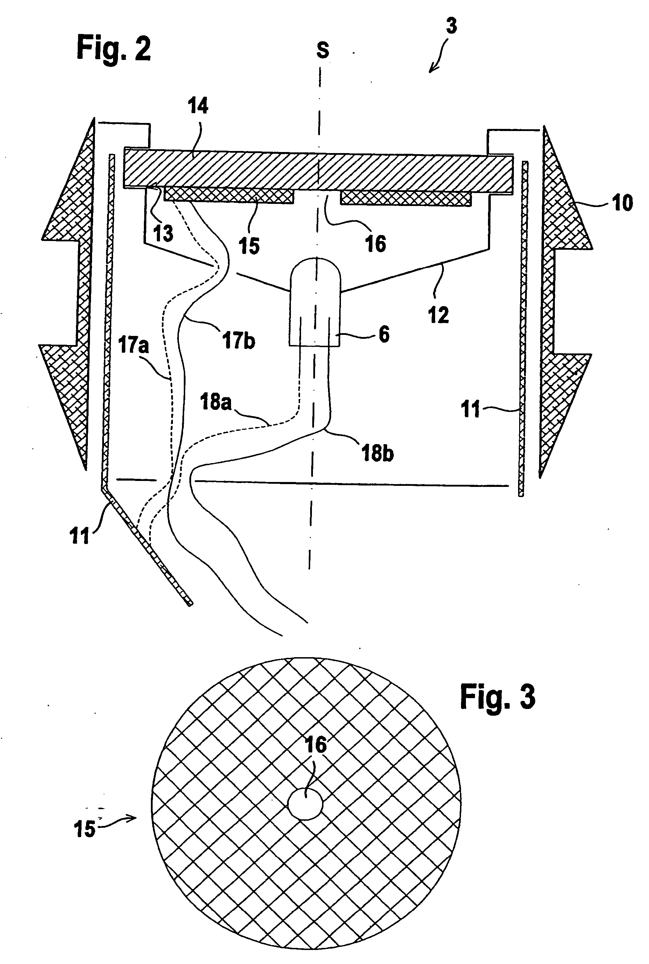

Figur 2 zeigt ein erstes Ausführungsbeispiel eines Ultraschallwandlers für die Sensoranordnung 1 gemäß Figur 1. Der Ultraschallwandler gemäß Figur 2 bildet dabei den Ultraschallsender 3 der Sensoranordnung 1 gemäß Figur 1.

Der Ultraschallwandler weist einen im Wesentlichen zu einer Symmetrieachse S rotationssymmetrischen Aufbau auf. Der Ultraschallwandler ist in einem Gehäuse 10 integriert. An der Innenwand des Gehäuses 10 verläuft zur elektromagnetischen Abschirmung ein Schirmbecher 11.

Im Innenraum des Gehäuses 10 befindet sich als optoelektronisches Element des optischen Sensors der Sender 6, der im vorliegenden Fall von einer Leuchtdiode gebildet ist. Der Sender 6 ist mittels einer taschenförmigen Halterung 12 im Innenraum des Gehäuses 10 so gelagert, dass die Strahlachse der vom Sender 6 emittierten Sendelichtstrahlen 5 mit der Symmetrieachse S zusammenfällt.

Das Gehäuse 10 weist eine frontseitige Öffnung auf. Im Bereich der Öffnung befindet sich an der Innenseite des Gehäuses 10 eine in Umfangrichtung umlaufende Nut 13. Diese Nut 13 dient als Aufnahme für eine Membran 14 und eine auf deren Rückseite aufsitzende Keramik 15.

Die kreisscheibenförmige Membran 14 ist transparent, das heißt für die Sendelichtstrahlen 5 des Senders 6 durchlässig. Die ebenfalls kreisscheibenförmige ausgebildete Keramik 15 weist, wie insbesondere auch aus der Einzeldarstellung der Keramik 15 in Figur 3 ersichtlich, eine zentrale Bohrung 16 auf. Die Bohrung 16 dient als Lochblende. Die vom Sender 6 emittierten Sendelichtstrahlen 5 werden somit entlang der Symmetrieachse S verlaufend durch die Lochblende und dann durch die Membran 14 aus dem Gehäuse 10 des Ultraschallwandlers geführt.

Die Keramik 15 bildet ein Piezoelement, das Schwingungen erzeugt und damit die Ultraschallwellen 2 generiert. Hierzu ist die Unter- und Oberseite der Keramik 15 mit einer Metallschicht beschichtet. Durch Anlegen einer Spannung an die Metallschichten wird die Keramik 15 in Schwingungen versetzt. Um eine möglichst effiziente Auskopplung der Schwingungsenergie der Ultraschallwellen 2 zu erhalten, das heißt um eine möglichst effiziente Energieübertragung vom Piezoelement an die außen liegende, das heißt außerhalb des Gehäuses 10 anschließende Luftschicht zu erhalten, ist die Membran 14 als Anpassschicht vorgesehen.

Auf die Keramik 15 als Ultraschallwellen 2 generierendem Piezoelement sind zwei Anschlussleitungen 17a, 17b geführt. Eine der Anschlussleitungen 17a ist von der Keramik 15 auf den Schirmbecher 11 geführt, das heißt die Anschlussleitung 17a bildet einen Masseanschluss. Die andere Anschlussleitung 17b führt von der Keramik 15 zur nicht dargestellten Steuereinheit, mittels derer der Ultraschallsender 3 angesteuert wird. Zwei weitere Anschlussleitungen 18a, 18b führen vom Sender 6 weg, wobei eine Anschlussleitung 18a zur Steuereinheit führt und die andere Anschlussleitung 18b zum Schirmbecher 11 geführt ist.

Der Ultraschallempfänger 4 der Sensoranordnung 1 weist einen zu Figur 2 entsprechenden Aufbau auf.

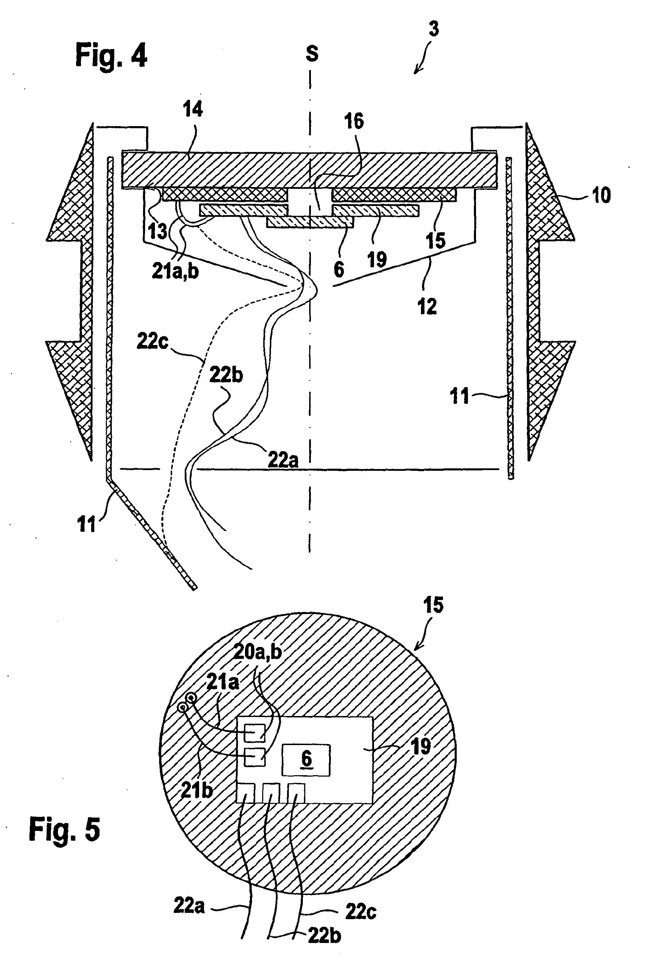

Figur 4 zeigt eine Abwandlung des Ultraschallwandlers gemäß Figur 2. Auch in diesem Fall ist der Ultraschallwandler als Ultraschallsender 3 ausgebildet, wobei im Innenraum des Gehäuses 10 des Ultraschallwandlers ein Sender 6 als optoelektronisches Element des optischen Sensors angeordnet ist.

Im Unterschied zur Ausführungsform gemäß Figur 2 ist bei der Ausführungsform der Sender 6 als SMD-(surface mounted device)-Bauteil auf einer Leiterplatte 19 ausgebildet. Die Leiterplatte 19 ist direkt auf der Rückseite der das Piezoelement bildenden Keramik 15 befestigt, vorzugsweise festgeklebt. Dabei ist der Sender 6 so auf der Leiterplatte 19 angeordnet, dass der Sender 6 unmittelbar hinter der die Lochblende bildenden Bohrung 16 in der Keramik 15 liegt. Damit werden die vom Sender 6 emittierten Sendelichtstrahlen 5 wieder durch die Lochblende und die transparente Membran 14 aus dem Ultraschallwandler geführt.

Alternativ kann der Sender 6 auch auf die Keramik 15 gebondet werden. Auf der Leiterplatte 19 sind Elektronikkomponenten zur Ansteuerung des Senders 6 vorgesehen. Weiterhin weist die Leiterplatte 19 Anschlusspads 20a, 20b auf, von welchen Bonddrähte 21 a, 21b zur Keramik 15 führen, so dass die Leiterplatte 19 auch mit dem Piezoelement kontaktiert ist.

Damit brauchen nur zwei Anschlussleitungen 22a, 22b von der Leiterplatte 19 zu der nicht dargestellten Steuereinheit geführt werden, wobei die Steuereinheit die Steuerung des Ultraschallsender 3 und des Senders 6 übernimmt. Eine weitere Anschlussleitung 22c wird zur Herstellung eines Masseanschlusses von der Leiterplatte 19 zum Schirmbecher 11 an der Innenwand des Gehäuses 10 geführt.

### Bezugszeichenliste

- (1): Sensoranordnung
- (2): Ultraschallwellen
- (3): Ultraschallsender
- (4): Ultraschallempfänger
- (5): Sendelichtstrahlen
- (6): Sender
- (7): Empfänger
- (8): Etikette
- (9): Trägermaterial
- (10): Gehäuse
- (11): Schirmbecher
- (12): Halterung
- (13): Nut
- (14): Membran
- (15): Keramik
- (16): Bohrung
- (17a): Anschlussleitung
- (17b): Anschlussleitung
- (18a): Anschlussleitung
- (18b): Anschlussleitung
- (19): Leiterplatte
- (20a): Anschlusspad
- (20b): Anschlusspad
- (21a): Bonddraht
- (21b): Bonddraht
- (22a): Anschlussleitung
- (22b): Anschlussleitung
- (22c): Anschlussleitung

## Patentansprüche

1. Sensoranordnung zur Erfassung von Objekten mit einem Ultraschallsensor, wobei in dem Ultraschallsensor ein optischer Sensor integriert ist, **dadurch gekennzeichnet, dass** der optische Sensor als optoelektronische Elemente einen Sendelichtstrahlen (5) emittierenden Sender (6) sowie einen die Sendelichtstrahlen (5) empfangenden Empfänger (7) aufweist, dass der Ultraschallsensor als ersten Ultraschallwandler einen Ultraschallwellen (2) emittierenden Ultraschallsender (3) und als zweiten ultraschall wandler einen Ultraschallwellen (2) empfangenden Ultraschallempfänger (4) aufweist, wobei jeder Ultraschallwandler in einem Gehäuse (10) integriert ist, in dessen Innenraum sich ein optoelektronisches Element befindet, dass jeder Ultraschallwandler als Piezoelement in Form einer scheibenförmigen Keramik (15) ausgebildet ist, welche in deren Zantrum eine Bohrung (16) aufweist, hinter welcherdas optoelektronische Element angeordnet ist, und welche eine Lochblende für das optoelektronische Element bildet, und dass auf der Vorderseite der Keramik (15) eine Anpassschicht in Form einer für die Sendelichtstrahlen (5) durchlässigen Membran (14) aufliegt.

2. Sensoranordnung nach Anspruch 1, **dadurch gekennzeichnet, dass** die optoelektronischen Elemente in den Ultraschallwandlern so integriert sind, dass die Strahlachsen der Ultraschallwellen (2) und der Sendelichtstrahlen (5) koaxial verlaufen.

3. Sensoranordnung nach Anspruch 1 oder 2, **dadurch gekennzeichnet, dass** das optoelektronische Element in Abstand zur Rückseite der Keramik (15) angeordnet ist.

4. Sensoranordnung nach Anspruch 3, **dadurch gekennzeichnet, dass** das optoelektronische Element auf einer Leiterplatte (19) angeordnet ist, welche auf der Rückseite der Keramik (15) aufsitzt.

5. Sensoranordnung nach Anspruch 4, **dadurch gekennzeichnet, dass** das optoelektronische Element auf die Keramik (15) gebondet ist.

6. Sensoranordnung nach einem der Ansprüche 1 bis 5, **dadurch gekennzeichnet, dass** an der Innenwand des Gehäuses (10) ein Schirmbecher (11) vorgesehen ist.

7. Sensoranordnung nach einem der Ansprüche 1 bis 6, **dadurch gekennzeichnet, dass** der Ultraschallsensor und der optische Sensor einzeln oder gemeinsam aktivierbar sind.

8. Sensoranordnung nach einem der Ansprüche 1 bis 7, **dadurch gekennzeichnet, dass** mit dieser als Ausgangssignal ein binäres Schaltsignal generiert wird.

9. Sensoranordnung nach einem der Ansprüche 1 bis 8, **dadurch gekennzeichnet, dass** mit dieser Strukturen mehrlagiger und/oder mehrschichtiger Objekte erfassbar sind.

10. Sensoranordnung nach Anspruch 9, **dadurch gekennzeichnet, dass** die zu detektierenden Objekte auf einem Trägermaterial (14) angeordnete Etiketten (15) sind.

## Claims

1. Sensor arrangement for detecting objects by an ultrasonic sensor, wherein an optical sensor is integrated in the ultrasonic sensor, **characterised in that** the optical sensor comprises, as optoelectronic elements, a transmitter (6) emitting transmitted light beams (5) and a receiver (7) receiving the transmitted light beams (5), that the ultrasonic sensor comprises, as first ultrasonic transducer, an ultrasonic transmitter (3) emitting ultrasonic waves (2) and, as second ultrasonic transducer, an ultrasonic receiver (4) receiving ultrasonic waves (2), wherein each ultrasonic transducer is integrated in a housing (10), in the interior space of which an optoelectronic element is disposed, that each ultrasonic transducer is constructed as a piezo element in the form of a disc-shaped ceramic (15), which has in the centre thereof a bore (16) behind which the optoelectronic element is arranged, and which forms an aperture for the optoelectronic element, and that an adapting layer in the form of a membrane (14) permeable by the transmitted light beams (5) rests on the front side of the ceramic (15).

2. Sensor arrangement according to claim 1, **characterised in that** the optoelectronic elements are so integrated in the ultrasonic transducers that the beam axes of the ultrasonic waves (2) and the transmitted light beams (5) run coaxially.

3. Sensor arrangement according to claim 1 or 2, **characterised in that** the optoelectronic element is arranged at a spacing from the rear side of the ceramic (15).

4. Sensor arrangement according to claim 3, **characterised in that** the optoelectronic element is arranged on circuitboard (19) which is seated on the rear side of the ceramic (15).

5. Sensor arrangement according to claim 4, **characterised in that** the optoelectronic element is bonded to the ceramic (15).

6. Sensor arrangement according to any one of claims 1 to 5, **characterised in that** a screening bowl (11) is provided at the inner wall of the housing (10).

7. Sensor arrangement according to any one of claims 1 to 6, **characterised in that** the ultrasonic sensor and the optical sensor are activatable individually or together.

8. Sensor arrangement according to any one of claims 1 to 7, **characterised in that** a binary switching signal is generated by this as output signal.

9. Sensor arrangement according to any one of claim 1 to 8, **characterised in that** multi-layered and/or multi-strata objects are detectable by these structures.

10. Sensor arrangement according to claim 9, **characterised in that** the objects to be detected are labels (15) arranged on a carrier material (14).

## Revendications

1. Dispositif capteur pour la détection d'objets avec un capteur à ultrasons, un capteur optique étant intégré dans le capteur à ultrasons, **caractérisé en ce que** le capteur optique présente en tant qu'éléments optoélectroniques un émetteur (6) émettant des rayons lumineux d'émission (5) ainsi qu'un récepteur (7) recevant les rayons lumineux d'émission (5), que le capteur à ultrasons présente, en tant que premier transducteur ultrasonore, un émetteur d'ultrasons (3) émettant des ondes ultrasonores (2) et, en tant que deuxième transducteur ultrasonore, un récepteur d'ultrasons (4) recevant des ondes ultrasonores (2), chaque transducteur ultrasonore étant intégré dans un boîtier (10) à l'intérieur duquel se trouve un élément optoélectronique, que chaque transducteur ultrasonore est réalisé comme un élément piézoélectrique sous la forme d'une céramique (15) en forme de disque qui présente en son centre un perçage (16) derrière lequel l'élément optoélectronique est disposé et lequel forme un sténopé pour l'élément optoélectronique, et qu'une couche d'adaptation sous la forme d'une membrane (14) transparente aux rayons lumineux d'émission (5) est appliquée sur la face avant de la céramique (15).

2. Dispositif capteur selon la revendication 1, **caractérisé en ce que** les éléments optoélectroniques sont intégrés dans les transducteurs ultrasonores de façon que les axes de faisceau des ondes ultrasonores (2) et des rayons lumineux d'émission (5) soient coaxiaux.

3. Dispositif capteur selon la revendication 1 ou 2, **caractérisé en ce que** l'élément optoélectronique est disposé à distance de la face arrière de la céramique (15).

4. Dispositif capteur selon la revendication 3, **caractérisé en ce que** l'élément optoélectronique est disposé sur une carte de circuits imprimés (19) qui repose sur la face arrière de la céramique (15).

5. Dispositif capteur selon la revendication 4, **caractérisé en ce que** l'élément optoélectronique est collé sur la céramique (15).

6. Dispositif capteur selon une des revendications 1 à 5, **caractérisé en ce qu'**un boîtier de blindage (11) est prévu sur la paroi intérieure du boîtier (10).

7. Dispositif capteur selon une des revendications 1 à 6, **caractérisé en ce que** le capteur à ultrasons et le capteur optique peuvent être activés individuellement ou en commun.

8. Dispositif capteur selon une des revendications 1 à 7, **caractérisé en ce qu'**il génère un signal de commutation binaire comme signal de sortie.

9. Dispositif capteur selon une des revendications 1 à 8, **caractérisé en ce qu'**il permet de détecter des structures d'objets à plusieurs épaisseurs et/ou à plusieurs couches.

10. Dispositif capteur selon la revendication 9, **caractérisé en ce que** les objets à détecter sont des étiquettes (15) disposées sur un matériau de support (14).
